# EUROPEAN PATENT APPLICATION

(11) **EP 4 711 941 A1**
(43) Date of publication of application: **18.03.2026**
(21) Application number: 25201550.8
(22) Date of filing: 11.09.2025
(51) Int. Cl.: G06F 15/17, G06F 15/78

(54) **SCALABLE PARTITIONING OF FUNCTIONS WITHIN APPLICATION SPECIFIC INTEGRATED CIRCUIT OR MICROELECTRONICS DEVICE**

(30) Priority: 13.09.2024 US 202418885177
(71) Applicant: SEAKR Engineering, LLC, Centennial, CO 80111 (US)
(72) Inventor: LOWRY, Anthony, Centennial, 80111 (US)
(74) Representative: Crowell & Moring U.K. LLP

(57) **Abstract**

A semiconductor wafer is provided including: processing cores; and die structures each including at least one processing core. Each processing core includes a set of first input output (I/O) interfaces configured for communication between the processing core and a second processing core, wherein the processing core and the second processing core are included in a first die structure of the die structures. Each processing core includes a second input output (I/O) interface configured for communication between the processing core and a third processing core, wherein the third processing core is included in a second die structure of the die structures. The processing cores are spaced apart by a target distance associated with separating one or more processing cores or one or more die structures from the semiconductor wafer.

## Description

### FIELD OF INVENTION

The present disclosure relates to an application specific integrated circuit (ASIC) or microelectronics device, and more specifically to scalable partitioning of functions within an ASIC or microelectronics device.

### BACKGROUND

Some ASIC implementations include multiple identical die connected in a multi-chip-module. Some other ASIC implementations include multiple instantiations of a function(s) are integrated in a single, monolithic die. In some cases, an ASIC in which multiple identical die are connected in a multi-chip-module has increased power consumption (e.g., due to the die-to-die I/O interfaces) compared to an equivalent ASIC in which multiple instantiations of the same function(s) are integrated in a single, monolithic die. However, a single monolithic die will consume more power compared to a multi-chip-module implementation for cases in which the total quantity of instantiated functions is reduced. Functions are digital features, analog features, or a mix of digital features and analog features that define the purpose of the device.

A semiconductor wafer is provided including: a plurality of processing cores; and a plurality of die structures each including at least one processing core of the plurality of processing cores, wherein each processing core includes: a set of first input output (I/O) interfaces configured for communication between the processing core and at least one second processing core of the plurality of processing cores, wherein the processing core and the at least one second processing core are included in a first die structure of the plurality of die structures; and a second input output (I/O) interface configured for communication between the processing core and at least one third processing core of the plurality of processing cores, wherein the at least one third processing core is included in a second die structure of the plurality of die structures, wherein the plurality of processing cores are spaced apart by a target distance associated with separating one or more processing cores of the plurality of processing cores or one or more die structures of the plurality of die structures from the semiconductor wafer.

In any one or combination of the embodiments disclosed herein, each processing core includes: processing circuitry configured to aggregate and process first data received from the at least one second processing core, wherein the processing circuitry generates second data in response to processing the first data; and routing circuitry configured to route the first data, the second data, or both to at least one fourth processing core included in the first die structure or to the at least one third processing core included in the second die structure.

In any one or combination of the embodiments disclosed herein, the routing circuitry is configured to route the first data, the second data, or both based on an address table associated with the plurality of processing cores, the plurality of die structures, or both.

In any one or combination of the embodiments disclosed herein, the routing circuitry is configured to reroute the first data, the second data, or both based on a detected fault associated with the at least one fourth processing core or to the at least one third processing core.

In any one or combination of the embodiments disclosed herein, the first die structure includes: processing circuitry configured to at least one of aggregate and process first data received from at least the second die structure of the plurality of die structures, wherein the processing circuitry generates second data in response to processing the first data; and routing circuitry configured to route the first data, the second data, or both to at least one third die structure of the plurality of die structures.

In any one or combination of the embodiments disclosed herein, the routing circuitry is configured to route the first data, the second data, or both based on an address table associated with the plurality of die structures.

In any one or combination of the embodiments disclosed herein, the routing circuitry is configured to reroute the first data, the second data, or both based on a detected fault associated with the at least one third die structure.

In any one or combination of the embodiments disclosed herein, the second I/O interface is configured for extra short reach (XSR) communications, very short reach (VSR) communications, or ultra short reach (USR) communications, among the plurality of processing cores.

In any one or combination of the embodiments disclosed herein, the first I/O interface, the second I/O interface, or both includes a serial interface or a parallel interface.

In any one or combination of the embodiments disclosed herein, each processing core includes: an active area including one or more circuits; and a crackstop structure surrounding the active area; and a scribe area associated with separating one or more die structures of the plurality of die structures from the semiconductor wafer.

In any one or combination of the embodiments disclosed herein, the semiconductor wafer further includes: a tunneling layer extending under, above, or through the crackstop structure, wherein the tunneling layer is electrically isolated from the crackstop structure.

In any one or combination of the embodiments disclosed herein, each processing core further includes: first electrostatic discharge (ESD) protection circuitry associated with the first set of I/O interfaces; and second ESD processing circuitry associated with the second I/O interface.

In any one or combination of the embodiments disclosed herein, respective structures of the plurality of processing cores are identical.

In any one or combination of the embodiments disclosed herein, a structure of at least one processing core of the plurality of processing cores is different from a structure of at least one other processing core of the plurality of processing cores.

In any one or combination of the embodiments disclosed herein, the second die structure is adjacent the first die structure.

A method of manufacturing a plurality of die structures is provided, the method including: fabricating a plurality of processing cores on a semiconductor wafer based on a reticle set defining scribe lines associated with separating the plurality of processing cores from the semiconductor wafer; and separating the plurality of die structures from the semiconductor wafer based on the reticle set and a target quantity of processing cores for at least one die structure of the plurality of die structures, wherein separating the plurality of die structures from the semiconductor wafer includes cutting the semiconductor wafer based on the scribe lines, wherein the plurality of processing cores are spaced apart by a target distance associated with separating one or more processing cores of the plurality of processing cores or one or more die structures of the plurality of die structures from the semiconductor wafer.

In any one or combination of the embodiments disclosed herein, the method further includes forming, in association with each processing core of the plurality of processing cores: an active area including one or more circuits; a crackstop structure surrounding the active area; and a scribe area associated with separating one or more die structures of the plurality of die structures from the semiconductor wafer.

In any one or combination of the embodiments disclosed herein, the method further includes forming a tunneling layer extending under, above, or through the crackstop structure, wherein the tunneling layer is electrically isolated from the crackstop structure.

In any one or combination of the embodiments disclosed herein, fabricating the plurality of processing cores includes fabricating at least one processing core of the plurality of processing cores with a different orientation relative to at least one other processing core, said different orientation being based on a target configuration of a die structure, and fabricating the plurality of processing cores is based at least in part on the target configuration.

In any one or combination of the embodiments disclosed herein, at least one die structure of the plurality of die structures is fabricated to have a different orientation relative to at least one other die structure of the plurality of die structures, said different orientation being based on a target configuration of the plurality of die structures on the semiconductor wafer, wherein fabricating the plurality of processing cores is based at least in part on the target configuration.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIG. 1 illustrates a plan view of a semiconductor wafer in accordance one or more embodiments of the present disclosure.
FIGS. 2A through 2G are block diagrams illustrating example aspects of a processing core and a die structure in accordance with one or more embodiments of the present disclosure.
FIG. 3A is a block diagram illustrating an example array of die structures in accordance with one or more embodiments of the present disclosure. FIG. 3B illustrates an example block diagram of a die structure in accordance with one or more embodiments of the present disclosure. FIG. 3C illustrates an example block diagram of the die structure of FIG. 3A according to a routing configuration.
FIGS. 4A through 4D illustrate aspects of route options and which routing is available in accordance with one or more embodiments of the present disclosure.
FIG. 5 is an example view of processing cores in accordance with one or more embodiments of the present disclosure.
FIG. 6 is a cross-sectional view illustrating example aspects of a tunneling layer in accordance with one or more embodiments of the present disclosure.
FIG. 7A is a cross-sectional view illustrating example aspects of a chip seal and guard ring in accordance with one or more embodiments of the present disclosure.
FIG. 7B is a cross-sectional view illustrating example aspects of a chip seal, guard ring, and die-to-die signal route in accordance with one or more embodiments of the present disclosure.
FIG. 8 illustrates an example flowchart of a method in accordance with one or more embodiments of the present disclosure.

### DETAILED DESCRIPTION

Processor chips or micro processing chips may include one to multiple processing cores. In some cases, including multiple cores increases performance by sharing or distributing the processing load. Some approaches include designing and manufacturing a chip for each configuration of one to multiple cores. For example, such approaches may involve a separate respective design, manufacturing, and test efforts for a sixteen-core processor and a four-core processor, even though the core utilized in the sixteen-core processor and the four-core processor is the same function. Functions of a device are digital features, analog features, or a mix of digital features and analog features that define the purpose of the device. Accordingly, for example, such approaches may involve multiple non-recurring engineering costs associated with the design and manufacturing of each configuration.

To add some ability to scale a single function from one to many, some approaches use a "chiplet" concept of multiple die within a device package, allowing for a package configuration tailored to target specifications. However, such approaches come at a cost. For example, in some cases, to support die to die communications within the device package, each die may be (in some cases, must be) implement I/O interfaces strong enough to maintain signal integrity from die to bump to substrate or interposer (and from substrate or interposer to bump to die). Approaches using such I/O interfaces, however, results in increased power consumption compared to a monolithic (e.g., nonchiplet) approach.

According to one or more embodiments of the present disclosure, designs on silicon wafer are created by exposing the design into rows and columns across the silicon wafer. The exposed area, referred to as a reticle (e.g., reticles 102 later described herein), in some cases, may contain the lithography for a design or multiple designs. The design(s) may be singulated from the wafer by slicing the wafer along horizontal and vertical scribe lines (also referred to herein as "kerfs"). The scribe line can be along a reticle (e.g., as illustrated by reticle scribe lines 107 later described herein) or internal to the reticle (e.g., as illustrated by inter-reticle scribe lines 103 later described herein). The singulated die(s) are assembled into a chip package.

In one or more embodiments, to allow for the scaling of functions while mitigating the consumption of additional power associated with die-to-die I/O interfaces, example aspects of the present disclosure provide a mechanism to an owning party to leave functions connected at the silicon wafer level or slice the silicon wafer into smaller instantiations (e.g., to as low as one function per singulated die).

In one or more embodiments, using the example of the processor core mentioned above, systems and techniques described herein enable the design of a single processing core that is connected to one or more identical neighboring processing cores via standard routing, but over a gap that allows for the kerf. The systems and techniques described herein support singulating a die from the wafer as a single core or in groups of 1x2 cores, groups of 2x2 cores (e.g., quad core processor), groups of 4x4 cores (e.g., sixteen-core processor), groups of 2x6 cores, and the like. The techniques described herein are not limited to a single function. The techniques described herein may be similarly applied to a collection of functions that can be stand alone or implemented in an array.

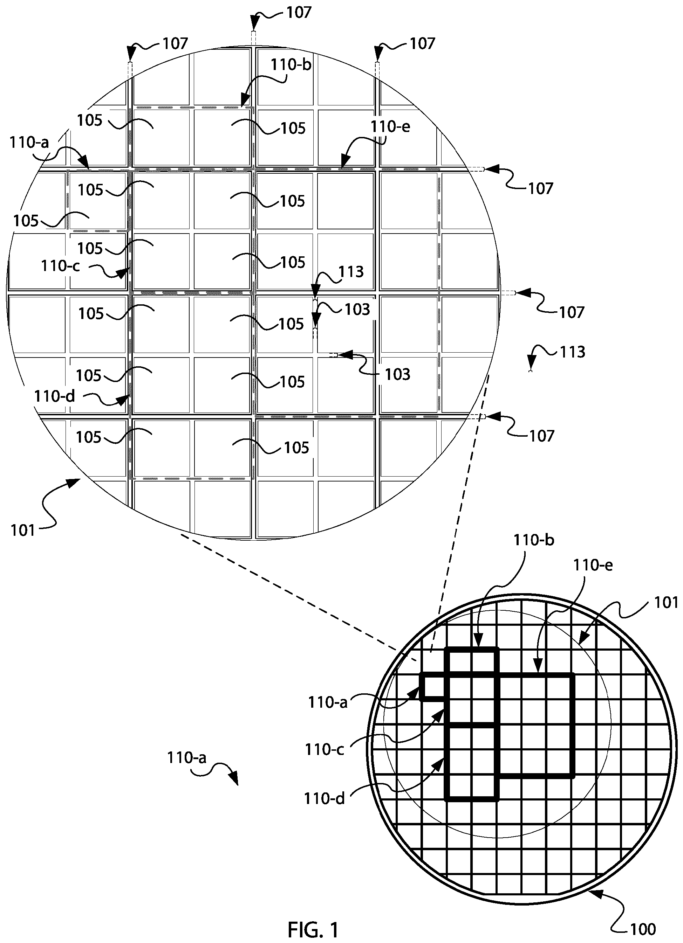

FIG. 1 illustrates a plan view of a semiconductor wafer 100 in accordance one or more embodiments of the present disclosure. FIG.1 further illustrates an enlarged view of a portion 101 of the semiconductor wafer 100.

The semiconductor wafer 100 includes multiple die structures 110, and each die structure 110 may include a processing core 105 (also referred to herein as a "core") formed thereon. Each processing core 105 may include processing circuitry. In some aspects, each processing core 105 may be identical. Additionally, or alternatively, in one or more embodiments, the semiconductor wafer 100 may include some processing cores 105 identical to one another and some processing cores 105 different from one another.

The semiconductor wafer 100 includes reticle scribe lines 107 and inter-reticle scribe lines 103 formed during the design of the semiconductor wafer 100 for separating the processing cores 105. The inter-reticle scribe lines 103 and scribe lines 107 may also be referred to as kerfs, and inter-reticle scribe lines 103 may be designed substantially the same as and have different dimensions than scribe lines 107. In some examples, an inter-reticle scribe line 103 may have a width less than the width of a scribe line 107. In a non-limiting example, an inter-reticle scribe line 103 width may be approximately 1/3 the width of a scribe line 107 width. In all examples, as described herein, the communication amongst dies across inter-reticle scribe lines 103 and/or scribe lines 107 is possible if desired after fabrication. For example, during a separation process, the semiconductor wafer 100 may be separated into die structures 110 (e.g., die structure 110-a) each including a single processing core 105 and/or die structures 110 (e.g., die structure 110-b through die structure 110-e) each including multiple processing cores 105. For simplicity, processing cores 105 included in other regions of the semiconductor wafer 100 are not illustrated in FIG. 1. In the example of FIG. 1, it is to be understood that lines in bold for indicating the die structure 110-a through die structure 110-e are for illustrative purposes for differentiating between the same, and widths of scribe lines (e.g., scribe lines 107) associated with die structure 110-a through die structure 110-e are not limited to thicknesses of the lines.

Although not illustrated herein, it is to be understood that the inter-reticle scribe lines 103 and scribe lines 107 may span the length and width of the semiconductor wafer 100, such that during a separation process, the semiconductor wafer 100 may be separated into die structures 110 of any suitable size (e.g., including any suitable quantity or arrangement of processing cores 105), by cutting according to one or more portions of the inter-reticle scribe lines 103 and/or scribe lines 107. The terms "die structure" and "die" may be used interchangeably herein.

The separation process may include sawing or cutting the semiconductor wafer 100 along the scribe lines 107 and/or inter-reticle scribe lines 103 using a mechanical process (e.g., scribing, sawing) or by a non-contact process (e.g., with a laser). The separation process is not limited thereto, and aspects of the present disclosure may include other suitable techniques supportive of the separation process.

In an example, the semiconductor wafer 100 may be cut such that die structure 110-a is a single processing core 105, die structure 110-b is a 1x2 array of processing cores 105, die structure 110-c is a 2x2 array of processing cores 105 (also referred to as a quad core processor), die structure 110-d is a 3x2 array of processing cores 105, and die structure 110-e is a 4x3 array of processing cores 105. Additionally, or alternatively, the semiconductor wafer 100 may be maintained without cutting the semiconductor wafer 100 (e.g., without separating the die structures 110 from the semiconductor wafer 100). The quantity of processing cores 105 associated with each die structure 110 is not limited thereto, and aspects of the present disclosure support any suitable quantity or array of processing cores 105 (e.g., a 3x3 array, a 4x4 array, a 1x3 array, and the like) per die structure 110.

For each processing core 105, a crackstop structure (not illustrated) is formed around the periphery of the processing core 105. In one or more embodiments, the crackstop structure is formed in dielectric and metal material around an active area of the processing core 105. The crack stop structure prevents or reduces the likelihood of cracking in the processing core 105 (and accordingly, for example, a die structure 110 including the processing core 105) during the separation process. In an example, for a multi-core die structure 110 (e.g., die structure 110-b, die structure 110-c, and the like), respective crackstop structures associated with processing cores 105 included in the multi-core die structure 110 prevent or reduce the likelihood of cracking in the multi-core die structure 110 (e.g., at the edges of the multi-core die structure 110) during the separation process along inter-reticle scribe lines 103 and/or along scribe lines 107.

According to one or more embodiments of the present disclosure, the processing cores 105 are spaced apart by a target distance 113 associated with separating one or more processing cores 105 (or die structures 110 including the one or more processing cores 105) from the semiconductor wafer 100. The target distance 113 may also be referred to herein as a gap, and represents a minimum distance which allows for selectively separating the processing cores 105. Some other techniques for fabricating a semiconductor wafer and separating the semiconductor wafer into multi-chip-modules fail to include a spacing between each processing core 105 according to the target distance 113 described herein, and such techniques thus do not support the flexibility described herein for maintaining a semiconductor wafer 100 as a whole or separating each of the processing cores 105 (e.g., or any suitable combination or array of processing cores 105) from a semiconductor wafer 100. For example, some other techniques may omit such a spacing described herein between each processing core 105. Example aspects of the crackstop structure are later described herein.

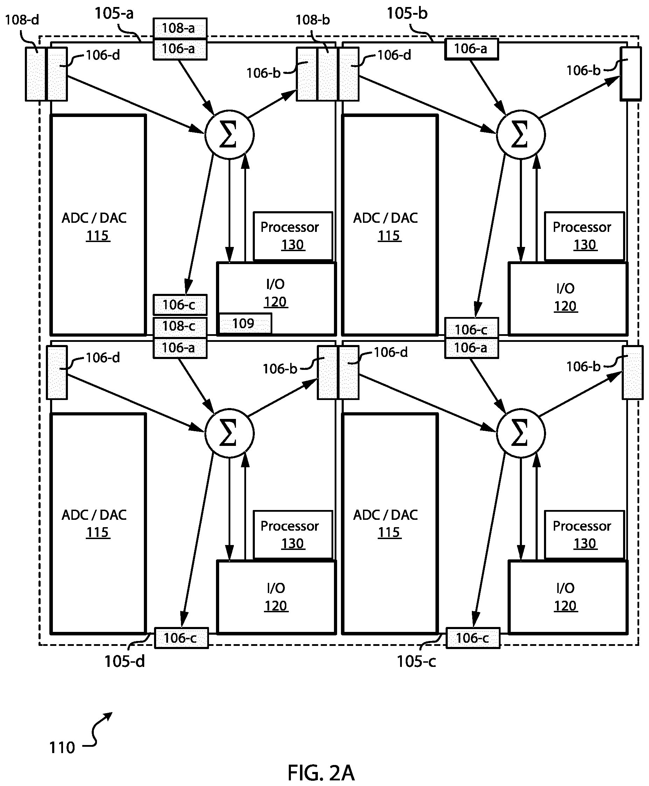

FIGS. 2A through 2G are block diagrams illustrating example aspects of processing cores 105 and die structures 110 in accordance with one or more embodiments of the present disclosure. In the examples illustrated at FIGS. 2A through 2G, the die structure 110 is a multi-core die structure including four processing cores 105 (e.g., processing core 105-a through processing core 105-d) and is an example of die structure 110-c illustrated at FIG. 1.

Referring to FIG. 2A, each processing core 105 may include a set of input output (I/O) interfaces 106 (e.g., I/O interface 106-a through I/O interface 106-d) configured for communication (e.g., transmission of data and/or receipt of data) between the processing core 105 and at least one other processing core 105 included in the same die structure 110.

For example, processing core 105-a and processing core 105-b may communicate via I/O interface 106-b of processing core 105-a (and I/O interface 106-d of processing core 105-b). Processing core 105-b and processing core 105-c may communicate via I/O interface 106-c of processing core 105-b (and I/O interface 106-a of processing core 105-c). Processing core 105-c and processing core 105-d may communicate via I/O interface 106-d of processing core 105-c (and I/O interface 106-b of processing core 105-d). Processing core 105-d and processing core 105-a may communicate via I/O interface 106-a of processing core 105-d (and I/O interface 106-c of processing core 105-a).

Each processing core 105 may include an analog-to-digital (ADC)/digital-to-analog (DAC) converter 115. However, embodiments supported by the present disclosure are not limited thereto. For example, each processing core 105 may include circuitry additional and/or alternative to ADC/DAC converter 115. In some embodiments, each processing core 105 may include suitable circuitry capable of performing one or more target functions or operations.

Each processing core 105 may include an I/O interface 120 configured for communication between the processing core 105 and one or more processing cores 105 included in a different die structure 110. For example, via I/O interface 120 of processing core 105-c, processing core 105-c may communicate with a processing core 105 (not illustrated) that is included in a die structure 110 (not illustrated) different from the die structure 110 of FIG. 2A.

In an example referring back to Fig. 1, in a multi-chip module (MCM) implementation having a plurality of die structures 110 within a package, an upper-left processing core 105 of die structure 110-c may communicate with a left-side processing core 105 of die structure 110-b via respective I/O interfaces 120 of the processing cores 105. In another example described with reference to Fig. 1, a lower-left processing core 105 of die structure 110-c may communicate with an upper-left processing core 105 of die structure 110-d via respective I/O interfaces 120 of the processing cores 105.

In one or more embodiments, the I/O interface 120 is configured for high-bandwidth extra short reach (XSR) communications among the processing cores 105, and the target distance 113 (see FIG. 1), between processing cores 105 may correspond to a physical distance supportive of data communications using XSR. Additionally, or alternatively, the I/O interface 120 may be configured for one or more other suitable high-bandwidth communication topologies (e.g., short reach (SR), very short reach (VSR), ultra short reach (USR), and the like) or implementations (e.g., for multi-chip modules (MCM) supportive of intercommunication between adjacent die structures 110 included in the semiconductor wafer 100, and the target distance 113 between processing cores 105 may correspond to a physical distance supportive of data communications using an applied communication topology (and the associated I/O interfaces 120). According to one or more embodiments of the present disclosure, the I/O interfaces 106 and the I/O interfaces 120 described herein can be any serial or parallel interface suitable for communications among the processing cores 105 (and corresponding die structures 110).

In one or more embodiments, each processing core 105 may include processing circuitry 130 (also referred to herein as a processor) configured to aggregate and process data received from another processing core 105 or another die structure 110, or a processing module of a different design and/or type (e.g., application specific integrated circuit (ASIC), field-programmable gate array (FPGA), graphics processing unit (GPU), central processing unit (CPU), and the like). In some aspects, the processing circuitry 130 may generate additional data in response to processing the received data. Each processing core 105 may include routing circuitry (not illustrated) configured to route the received data (and/or the additional data generated by the processing circuitry 130 in response to processing the received data) to a further processing core 105.

In order to protect the device from electrostatic discharge via the nets (i.e., the metal connections from one logic or analog element to another element) exposed as a process of singulating die, in one or more embodiments, each processing core 105 may include electrostatic discharge (ESD) protection circuitry 108 respective to the I/O interfaces 106 and ESD processing circuitry 109 respective to the I/O interfaces 120. The ESD processing circuitry 108 and ESD processing circuitry 109 may protect each processing core 105 (e.g., circuitry included in the processing core 105) from electrostatic discharge via the nets exposed as a process of singulating the processing cores 105 from the semiconductor wafer 100. In some embodiments, The ESD processing circuitry 108 and ESD processing circuitry 109 may be of the same or different type or configuration. For simplicity and so as not to obstruct from other features of the processing cores 105 and the die structure 110, at FIG. 2A, ESD processing circuitry 108-a through ESD processing circuitry 108-d and ESD processing circuitry 109 are illustrated at processing core 105-a, but not illustrated with respect to processing core 105-b through processing core 105-d. For simplicity, the ESD protection circuitry 108 and ESD processing circuitry 109 is not illustrated in the further following figures.

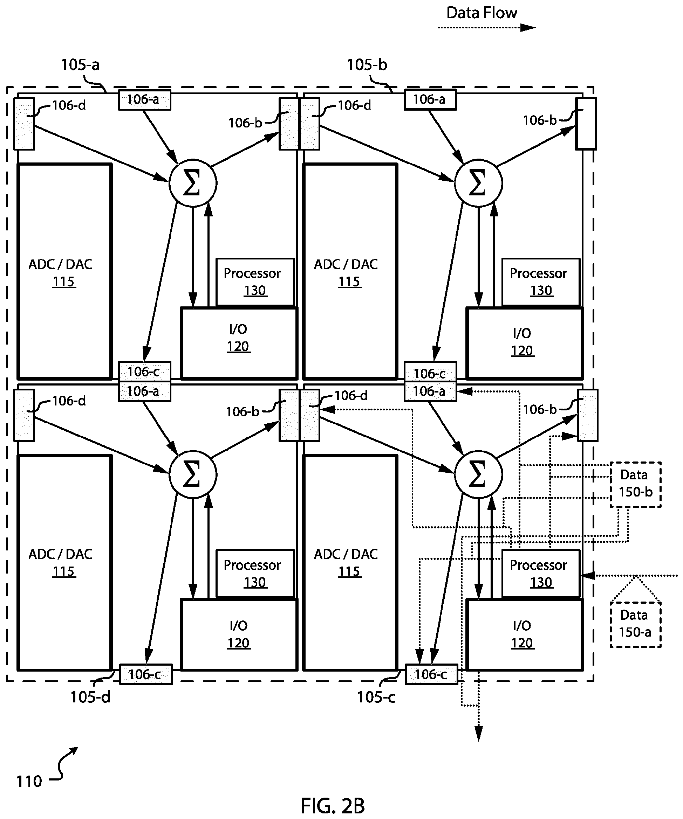

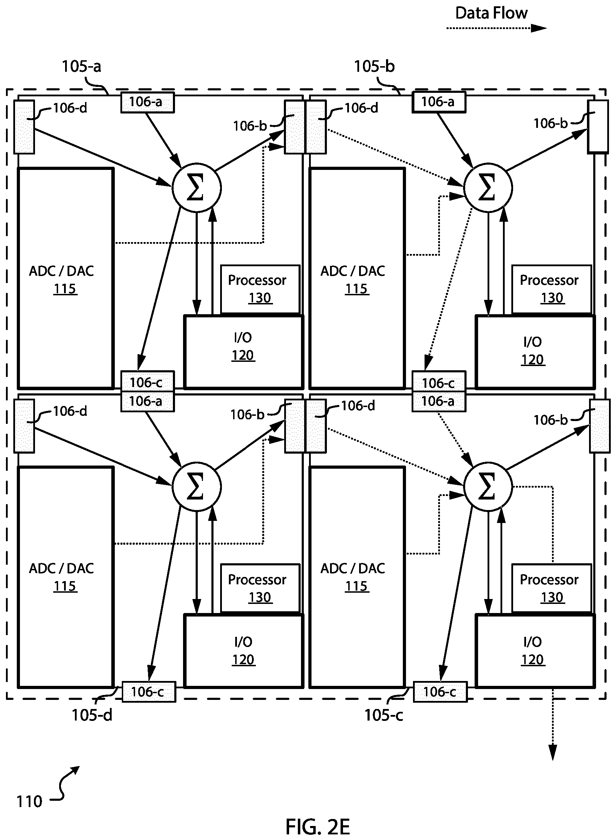

Examples of the processing circuitry 130 aggregating and processing data received (e.g., via the routing circuitry) from a processing core 105 included in a different die structure 110 are described with reference to FIGS. 2B through 2D. Examples of the processing circuitry 130 aggregating and processing data received (e.g., via the routing circuitry) from a processing core 105 included in the same die structure 110 are later described with reference to FIGS. 2E through 2F.

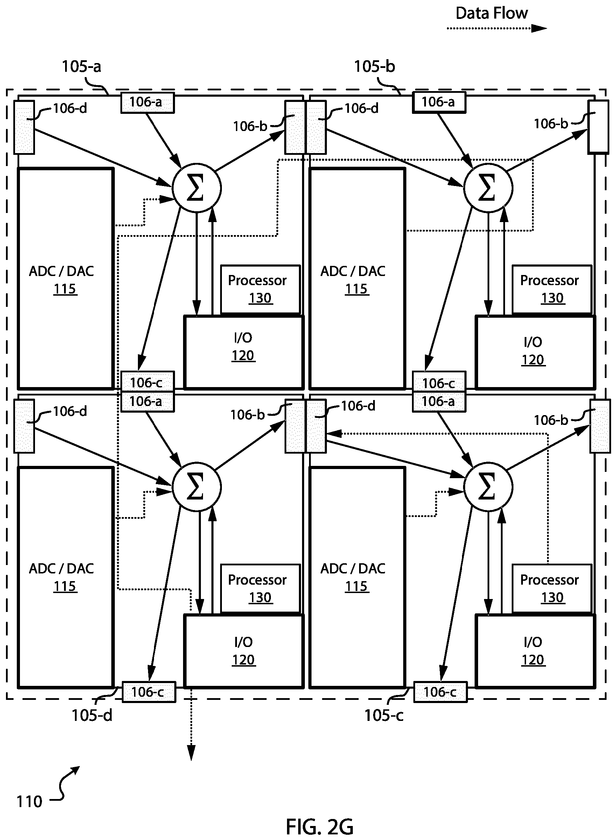

In one or more embodiments, via the routing circuitry, the die structure 110 is capable of setting or modifying a route via which data is to be propagated among processing cores 105, based on a detected fault associated with one or more processing cores 105 included in the die structure 110. Example aspects of setting or modifying the route based on a detected fault associated with a processing core 105 are later described with reference to FIG. 2G. In some examples, processing circuitry 130 of each respective processing core 105 may also include a storage (e.g., memory) (not shown) for storing a routing table for determining the route or path among cores 105 within a die 110. In response to a command from a central control authority (e.g., an on-board processor or other payload-level processor), and/or in response to a detected fault, the routing table(s) may be updated (e.g., by a processing circuitry 130) to re-route data paths among cores 105 as applicable.

Referring to FIGS. 2B through 2D, the processing core 105-c may receive data 150-a from a processing core 105 included in a die structure 110 (not illustrated) different from and adjacent to the die structure 110. The processing core 105-c may aggregate and process the data 150-a (e.g., using processing circuitry 130). In some examples, the processing core 105-c may generate data 150-b in response to processing the received data.

In an example, with reference to FIGS. 1 and 2B, die structure 110 illustrated in FIG. 2B may be die structure 110-c of FIG. 1, and the die structure 110 providing the data 150-a may be die structure 110-e of FIG. 1. Additionally, or alternatively, the processing core 105-c may receive data (not illustrated) from a processing core 105 included in another die structure 110 (e.g., die structure 110-d of FIG. 1) adjacent to die structure 110.

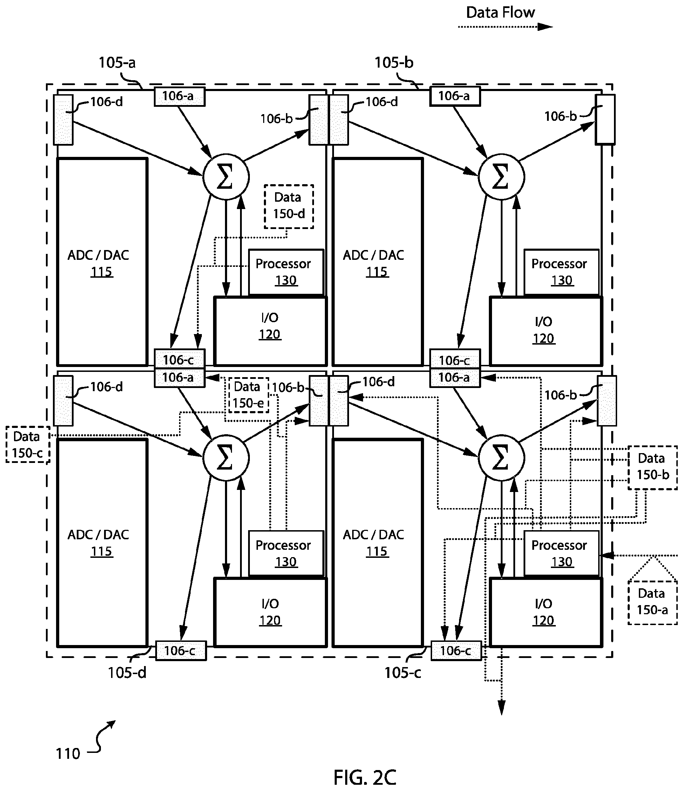

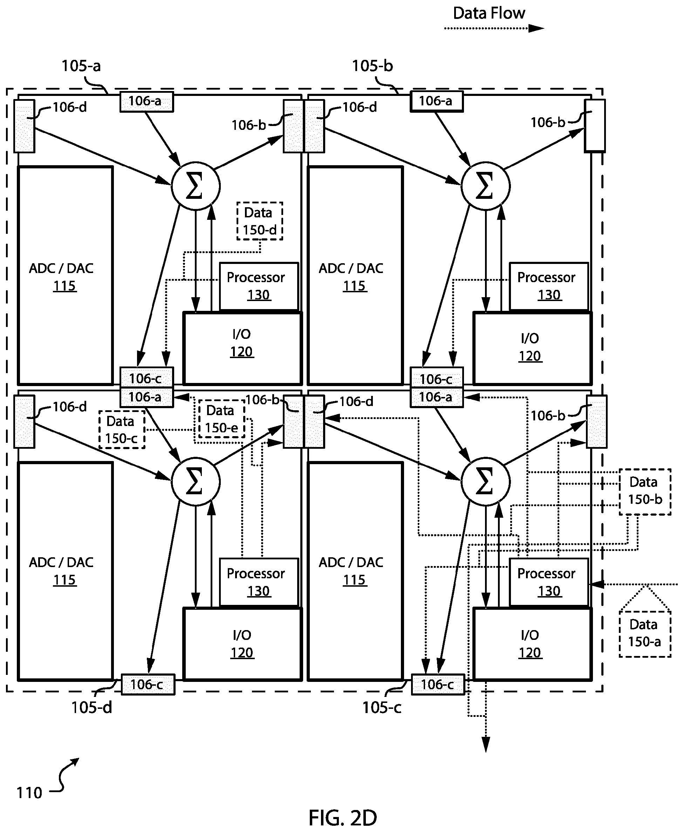

With reference to FIGS. 2C and 2D, the example die structure 110 is a quad core processor including processing core 105-a through processing core 105-d, and the processing core 105-c may distribute portions or the entirety of data 150-a (and/or the data 150-b generated by processing core 105-c) to processing core 105-b and processing core 105-d via respective I/O interfaces 106 of processing core 105-b, processing core 105-c, and processing core 105-d. Additionally, or alternatively, the processing core 105-c may distribute portions or the entirety of data 150-a (and/or the data 150-b) to a processing core 105 (not illustrated) included in another die structure 110 (e.g., die structure 110-d of FIG. 1) adjacent to die structure 110 in the same semiconductor package (such as in a MCM implementation) or a die structure 110 in a different semiconductor package, via respective I/O interfaces 120 of die structure 110 and the other die structure 110.

Processing core 105-d may aggregate and process the data 150-b (e.g., using processing circuitry 130). In some examples, the processing core 105-c may generate data 150-c in response to processing the received data. In the example of FIG. 2C, the processing core 105-d may distribute portions or the entirety of data 150-b (and/or the data 150-c generated by processing core 105-d) to processing core 105-a via respective I/O interfaces 106 of processing core 105-d and processing core 105-a.

Processing core 105-a may aggregate and process the data 150-c (e.g., using processing circuitry 130). In some examples, the processing core 105-a may generate data 150-d in response to processing the received data. In one or more embodiments, processing core 105-a may provide the data 150-c (and/or the data 150-d generated by processing core 105-a) to processing core 105-d. Processing core 105-d may generate data 150-e in response to processing the data 150-c (and/or data 150-d). Processing core 105-d may provide the data 150-e (and/or data 150-c and/or data 150-d) to processing core 105-c, and processing core 105-c may further process and/or forward the data 150-e.

Accordingly, for example, the example aspects described herein support implementations in which processing core 105-c may aggregate data from processing core 105-a, processing core 105-b, and processing core 105-d via respective I/O interfaces 106, and further, aggregate data from a processing core 105 (not illustrated) included in other die structures 110 (e.g., die structure 110-e of FIG. 1 and/or other types of processing cores types) via respective I/O interfaces 120. Processing core 105-c may provide the entirety or a portion of the aggregated data to a processing core 105 (not illustrated) included in another die structure 110 (e.g., die structure 110-d of FIG. 1) adjacent to die structure 110, via respective I/O interfaces 120.

In one or more embodiments, with reference to FIG. 2E in an example non-limiting implementation, the processing cores 105 may each include an ADC/DAC converter 115, and each processing core 105 may process received data 150 described herein (not illustrated) (e.g., data 150-a, data 150-b, and the like illustrated at FIGS. 2B through 2D) via a respective ADC/DAC converter 115, prior to processing the received data 150. In one or more embodiments, each processing core 105 may process generated data 150 described herein via a respective ADC/DAC converter 115 prior to forwarding the generated data 150 to another processing core 105. In some example implementations, one or more processing cores 105 may be absent a respective ADC/DAC converter 115, or have the ADC/DAC converter 115 in a power-island mode, low-power mode, or turned off (e.g., no power).

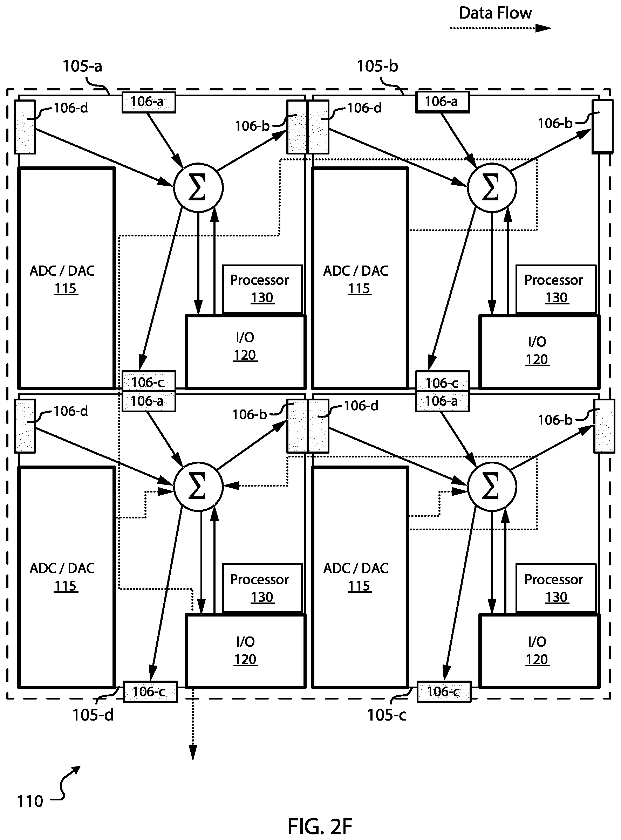

FIG. 2F illustrates an example data flow in which processing core 105-d may aggregate data from processing core 105-a, data from processing core 105-b (as provided through processing core 105-a), and data from processing core 105-c via I/O interfaces 106. In the example of FIG. 2F, processing core 105-d may provide the entirety or a portion of the aggregated data to a processing core 105 (not illustrated) included in another die structure 110 (e.g., die structure 110-d of FIG. 1) adjacent to die structure 110, via respective I/O interfaces 120.

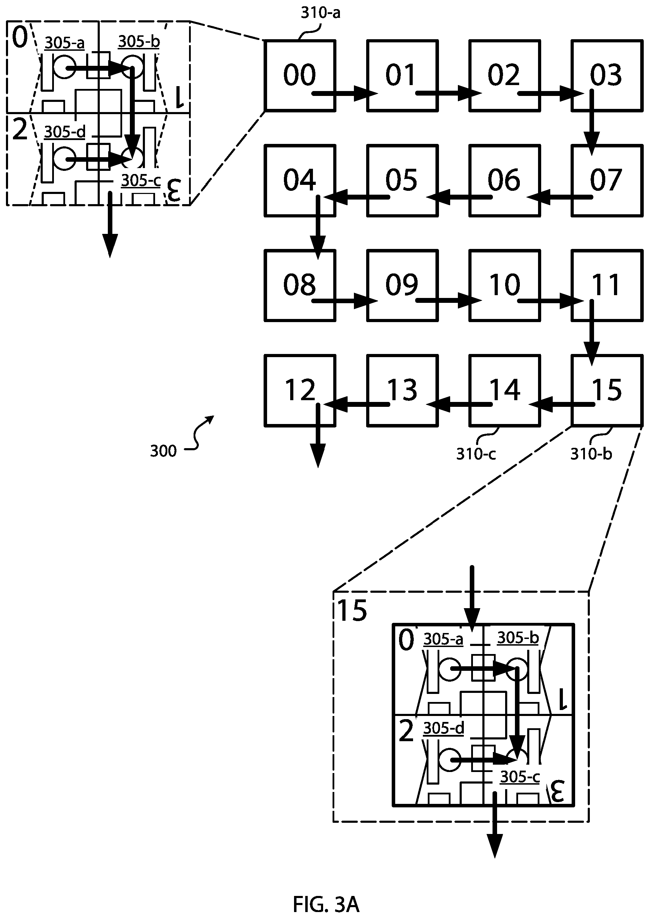

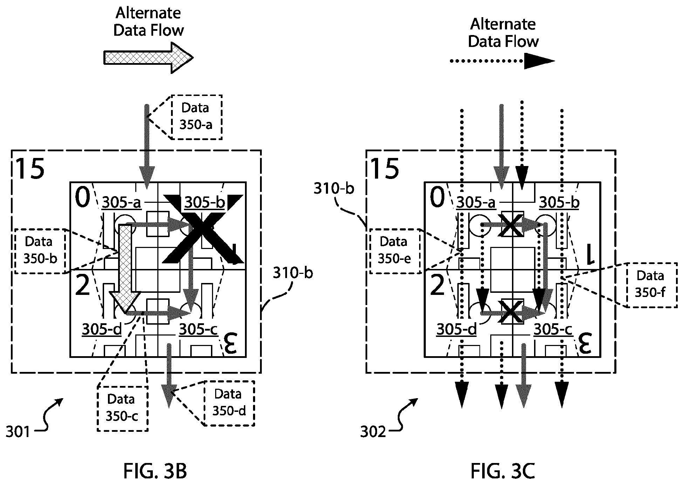

Accordingly, for example, the processing cores 105 and die structures 110 described herein support data aggregation and forwarding among different processing cores 105 and different die structures 110. Example aspects of data aggregation and forwarding among different die structures 110 are later described with reference to FIGS. 3A and 3B.

According to one or more embodiments of the present disclosure, the processing cores 105 and die structures 110 described herein support rerouting (e.g., via routing circuitry described herein) for cases in which a fault is detected in association with a processing core 105. For example, FIG. 2G illustrates an example data flow in which processing core 105-c is defective (e.g., due to a radiation incident such as a single event effect (SEE) affecting the processing core 105-c, a manufacturing defect, a latent manufacturing defect, or the like). In FIG. 2G, processing core 105-d may aggregate data from processing core 105-a and processing core 105-b (e.g., via processing core 105-a) via respective I/O interfaces 106 of processing core 105-d and processing core 105-a. In the example of FIG. 2G, processing core 105-d may provide the entirety or a portion of the aggregated data to a processing core 105 (not illustrated) included in another die structure 110 (e.g., die structure 110-d of FIG. 1) proximal (temporally or spatially) to die structure 110, via respective I/O interfaces 120.

Non-limiting examples of the processing cores 105 described herein include general processing cores (e.g., graphics processing units (GPUs)), central processing units (CPUs), microcontrollers, real-time processors, vector processors, digital signal processors (DSPs), radio frequency (RF) transceivers, controllers (e.g., memory controllers, power system controllers), and the like.

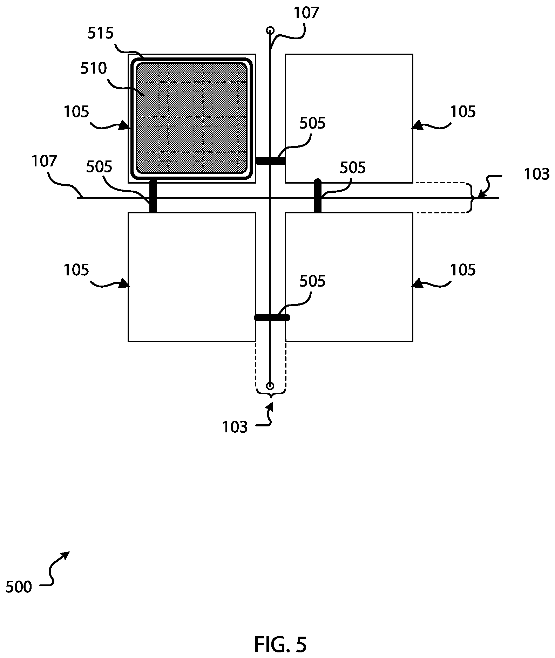

According to one or more embodiments of the present disclosure, routing and rerouting (e.g., in the case of a detected fault associated with a processing core 105) among the processing cores 105 may be implemented based on addresses included an address table (also referred to herein as a routing table) respective to the processing cores 105 and/or the die structures 110. Example aspects of the addresses and address table are later described with reference to FIG. 5.

As described herein, in accordance with one or more embodiments of the present disclosure described herein, the processing cores 105 and die structures 110 support radiation impact-specific additional personalities (e.g., routing configurations) for routing data between processing cores 105 and/or between die structures 110, in which a subset of chiplets can be configured to run as redundant chiplets. For example, for a die structure 110 including an array (e.g., a 4x4 array, 6x6 array, or the like) of processing cores 105, a subset of the processing cores 105 may be implemented as redundant processing cores 105 for cases in which a processing core 105 included in the die structure 110 has a defect (e.g., due to radiation impact). In another example, for an array (e.g., a 4x4 array, 6x6 array, or the like) of die structures 110, a subset of the die structures 110 may be implemented as redundant die structures 110 for cases in which a die structure 110 included in array has a defect (e.g., due to radiation impact). A combination of redundant die structures 110, redundant processing cores 105, and a mixture of both redundant die structures 110 and processing cores 105 may be implemented within the scope of the present disclosure. In one or more embodiments, the techniques described herein may also include utilizing XSR (or other suitable topologies described herein) to behave redundantly and allow reverse data flow to adapt as applicable to work around a chiplet affected by radiation impact.

FIG. 3A is a block diagram illustrating an example array 300 of die structures 310, in which each die structure 310 includes multiple processing cores 305. In this example, the die structures 310 are 4x4 matrices of processing cores 105. However, the present disclosure includes an array 300 including die structures 310 having a diverse type of processing core 105 arrays, such as, for example, 1x2, 2x2, 3x2, 3x3, 4x2, 4x3, 4x3, 4x4, and the like. The processing cores 305 and die structures 310 include example aspects of processing core 105 and die structure 110 described herein, and repeated illustration and descriptions of like elements are omitted for brevity. In the example of FIG. 3A, die structures 310 are labeled '00' through '15'.

Referring to FIG. 3A, die structure 310-a includes processing cores 305-a through 305-d, and die structure 310-b includes respective processing cores 305-a through 305-d. In accordance with one or more embodiments of the present disclosure, with reference to example die structure 310-a, the techniques described herein support rotating one or more processing cores 305 (e.g., processing core 305-b, processing core 305-c) in association with a target configuration for die structure 310-a. For example, rotating one or more processing cores 305 supports routing between processing core 305-a through processing core 305-d.

In a similar example, with reference to example die structure 310-b, the techniques described herein support rotating one or more processing cores 305 (e.g., processing core 305-b, processing core 305-c) in association with a target configuration for die structure 310-b. For example, rotating one or more processing cores 305 supports routing between processing core 305-a through processing core 305-d. In some example implementations, the processing cores 305 included on the wafer 100 may be designed or arranged such that all of the processing cores 305 are of the same orientation throughout the reticle and/or throughout the wafer 100. In some other example implementations, the processing cores 305 may be designed or arranged such that one or more of the processing cores 305 included on the semiconductor wafer 100 is of a different orientation (e.g., is a rotated version) compared to other processing cores 305. It should be appreciated that such rotating enables aligning a transmit of one processing core 305 to a receive of another processing core 305 while both still may have the same floorplan (on the wafer 100). Such a configuration is advantageous because there is only one floorplan to design and validate, and then just a rotation / reorientation during fabrication may be applied to assemble a larger array.

In some example implementations, the processing cores 305 of a given die structure 310 (e.g., die structure 310-b) may be designed or arranged such that all of the processing cores 305 of the die structure 310 are of the same orientation. In some other example implementations, the processing cores 305 of a given die structure 310 (e.g., die structure 310-b) may be designed or arranged such that one or more of the processing cores 305 is of a different orientation (e.g., is a rotated version) compared to other processing cores 305. For example, as indicated by the rotated numbers '1' and '3' illustrated with respect to the die structure 310-a of FIG. 3A, processing core 305-b and processing core 305-c have each been rotated 180 degrees.

FIG. 3B illustrates an example block diagram 301 of the die structure 310-b of FIG. 3A, in which the die structure 310-b implements an alternate data flow for processing and routing data 350-a received at the die structure 310-b due to a defect associated with processing core 305-b. For example, processing core 305-a receives the data 350-a. Processing core 305-a may process data 350-a and provide data 350-b (e.g., generated by 305-a in response to processing data 350-a) and/or data 350-a to processing core 305-d. Processing core 305-d may process data 350-b (and/or data 350-a) and provide data 350-c (e.g., generated by 305-d in response to processing data 350-a and/or b) to processing core 305-c. Processing core 305-c may process data 350-c (and/or data 350-a or data 350-b) and provide data 350-d to die structure 310-c of FIG. 3A.

FIG. 3C illustrates an example block diagram 302 of the die structure 310-b of FIG. 3A according to another routing configuration. In the example of FIG. 3C, data processing may respectively be performed in parallel by a first column (e.g., including processing core 305-a and processing core 305-d) and a second column (e.g., including processing core 305-b and processing core 305-c), without intercommunication between the first column and the second column. It is worth noting that this parallel processing is enabled by a change in the routing table discussed herein, and that the die structure 310-b is physically laid out as discussed previously. For example, processing core 305-a may pass data 350-e (e.g., as generated by or received by processing core 305-a) to processing core 305-d, and processing core 305-b may pass data 350-f (e.g., as generated by or received by processing core 305-b) to processing core 305-c. In some embodiments, the data path between processing core 305-a and processing core 305-d and/or the data path between processing core 305-b and processing core 305-c may be implemented for redundancy as described above, or implemented to enable parallel processing (e.g., polar digital signal processing, GPU-style processing, processing related to artificial intelligence, machine learning, cryptology, video processing, or signal processing, and the like).

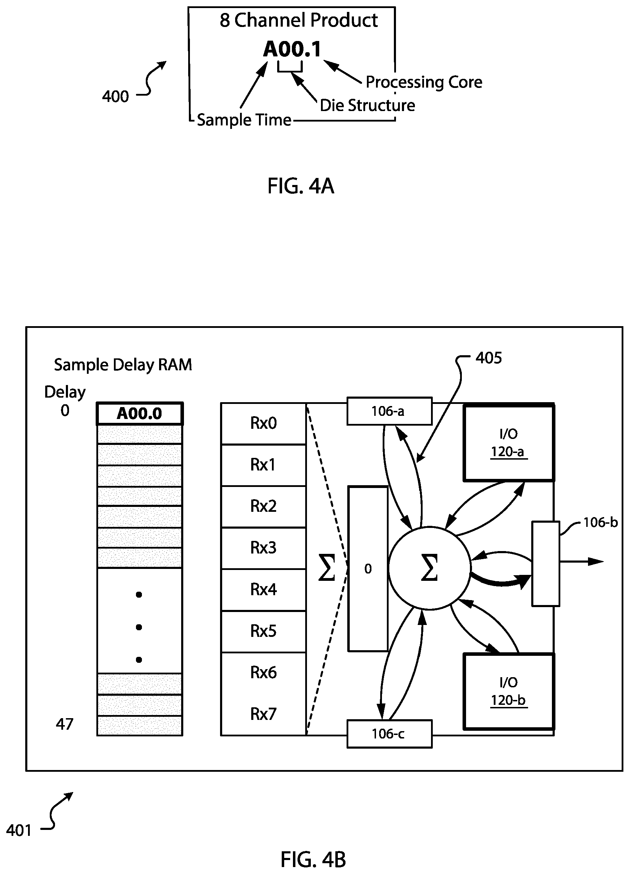

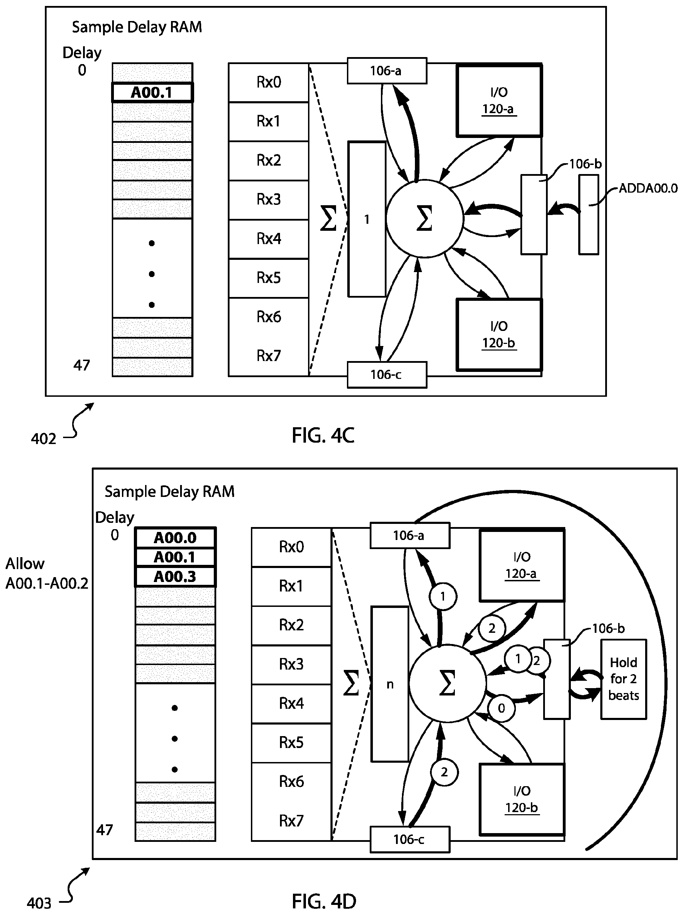

FIGS. 4A through 4D are examples illustrating aspects of route options and which routing is available as described herein. FIGS. 4B through 4D illustrate examples 401 through 403 of propagating data between die structures 310 (and respective processing cores 305-a through 305-d included in each of the die structures 310) in accordance with one or more embodiments of the present disclosure. Aspects of propagating data between the die structures 310 (and the included processing cores 305) are described with reference to FIG. 3A and FIGS. 4B through 4D.

With reference to FIG. 4A, the propagation of data and the timing associated with accessing or sampling the data may be indicated by an identifier 400 of 'ABC.D,' where 'A' refers to a sample time (e.g., temporal instance or temporal period), 'BC' refers to die structure 310 (e.g., among die structures labeled '00' through '15' in FIG. 3A), and 'D' refers to a processing core 305 (e.g., one of processing core 305-a through processing core 305-d) of the die structure 310. In an example, with reference to the identifier 400 in FIG. 4A and the array 300 in FIG. 3A, the identifier 400 of 'A00.1' refers to a sample time 'A' associated with accessing data from processing core 305-b (processing core '1') of die structure 310-a (die structure '00'). The identifier 400 (and other identifiers) may be included in an address table as described herein.

Example 401 illustrates various candidate routing paths 405 usable by processing core 305-a ('0') included in the die structure 310-a ('00') of FIG. 3A. Based on the identifier 400 and corresponding information included in an address table described herein, the processing core 305-a may identify (e.g., by processing circuitry 130 described herein and illustrated in FIGS. 2A through 2G) what data to access, aggregate, and/or process, and further, a routing path 405 via which to propagate or pass the data. For example, the processing core 305-a may identify, based on the identifier 400, whether to propagate the data via an I/O interface 106-a (e.g., a 'North' I/O interface), an I/O interface 106-b (e.g., an 'East' I/O interface), an I/O interface 106-c (e.g., a 'South' I/O interface), an I/O interface 120-a (e.g., an XSR interface), or an I/O interface 120-b (e.g., an XSR interface). Based on the identifier 400, the processing core 305-a may identify a corresponding entity to which to propagate the data. Although I/O interface 120-a and I/O interface 120-b are illustrated in the example 401, embodiments of the present disclosure are not limited thereto. For example, in some cases, one of I/O interface 120-a or I/O interface 120-b may be omitted.

In one or more embodiments, the identifier 400 may be associated with a routing 'personality' described herein for activating a redundant path (e.g., for cases in which a processing core 305 is defective). In some aspects, the routing 'personality' may provide a means of identifying a particular die (e.g., die structure 310) of an array of die within a device. Embodiments of the present disclosure may include programming the routing 'personalities' into the fuse block or memory (e.g., non-volatile memory (NVM) on the die. Example 402 and example 403 further illustrate examples of routing paths 405 being used in association with propagating or passing data. Referring to examples 401 through 403, selected or active routing paths among the available routing paths 405 are indicated as bold arrows.

FIG. 5 is an example view 500 of processing cores 105 and reticle scribe lines 107 described with reference to FIG. 1, in which the processing cores 105 are spaced apart by a target distance 113 (also referred to herein as a gap or the target kerf) supportive of high-bandwidth connections 505 (e.g., XSR, USR, serial interfaces, parallel interfaces, and the like) described herein between neighboring processing cores 105.

According to one or more embodiments of the present disclosure, the target distance 113 supports slicing of the semiconductor wafer 100, along the scribe lines 107, into dies (e.g., die structures 110 each including one or more processing cores 105). In some cases, slicing along the scribe lines 107 includes slicing across one or more high-bandwidth connections 505, which differs from other semiconductor wafers for implementing multi-chip designs, as such other approaches do not provide interconnectivity between adjacent processing cores 105 unless the processing cores 105 are intended to be incorporated in the same die structure 110. In contrast, the techniques described herein include high-bandwidth connections 505 between all adjacent processing cores 105 in the semiconductor wafer 100, which provides increased design flexibility while reducing design overhead. For example and without limitation, a wafer 100 can be provided with uniformly-designed processing cores 105 across the surface area of the wafer 100. The scribe lines 107 are designed to have a kerf width of the target distance 113, which in accordance with one or more embodiments of the present disclosure, allow for dicing along the scribe line 107 if desired, or maintaining highspeed communications connections between cores 105, for cases of cores 105 which are not separated from each other during the dicing process.

With reference to FIG. 5, each processing core 105 includes an active area 510 (including one or more circuits) and a crackstop structure 515 surrounding the active area 510.

According to one or more embodiments of the present disclosure, separating the processing cores 105 from a semiconductor wafer 100 may be based on scribe lines 107 defined by a reticle set. In one or more embodiments, the present disclosure supports techniques for updating one or more design rule check (DRC) rules corresponding to reticle boundaries associated with the reticle set and the semiconductor wafer 100. For example, in some cases, foundry capabilities for fabricating a given semiconductor wafer 100 (and processing cores 105 included therein) may be reduced compared to other foundries, and the systems and techniques described herein may include updating one or more DRC rules corresponding to reticle boundaries based on such foundry capabilities.

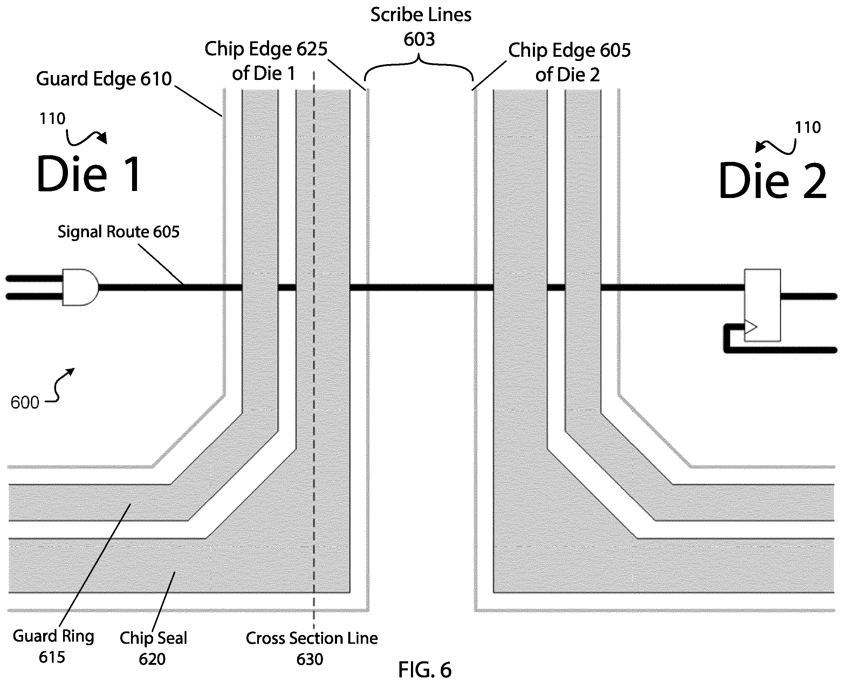

FIG. 6 is a plan view 600 illustrating example aspects of adjacent die structures 110 (e.g., Die 1, Die 2) in accordance with one or more embodiments of the present disclosure. Examples of a guard edge 610, a guard ring 615 (also referred to herein as a guard ring structure), a chip seal 620, and chip edge 625 of each die structure 110 is illustrated at FIG. 6. In accordance with one or more embodiments of the present disclosure, scribe lines 603 (kerf) are implemented at the chip edges 625 of the die structures 110.

Signal route 605 (also referred to herein as die-to-die signal routing) supports communication between the die structures 110. Signal route 605 includes aspects of high-bandwidth connections 505 described with reference to FIG. 5.

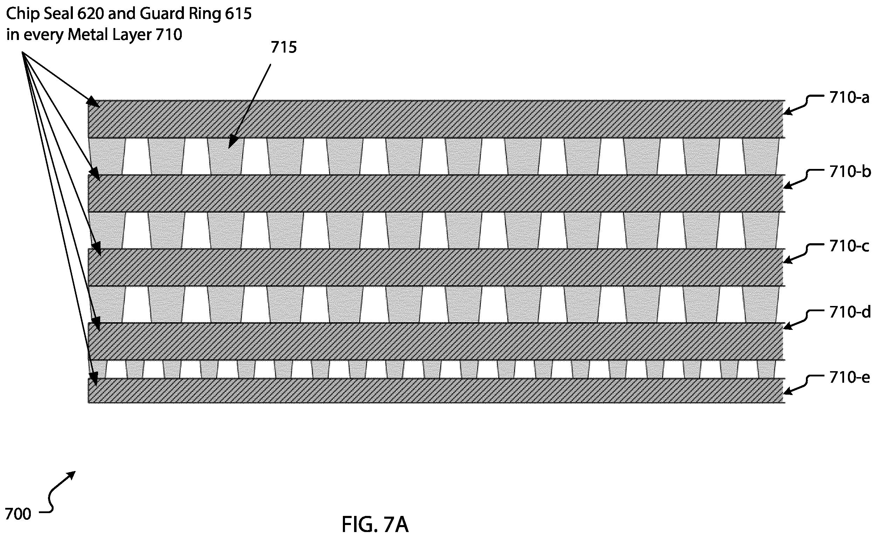

FIG. 7A is a cross-sectional view 700 illustrating example aspects of a chip seal and guard ring in accordance with one or more embodiments of the present disclosure. Cross-sectional view 700 illustrates examples of metal layers 710 (e.g., metal layer 710-a through metal layer 710-e) and vias 715 (i.e., metal layer to metal layer vias) supportive of die structures 110 and scalable partitioning in accordance with one or more embodiments of the present disclosure. Although not illustrated with reference to FIG. 7A, embodiments of the present disclosure include implementing the guard ring 615 and chip seal 620 in each of the metal layers 710.

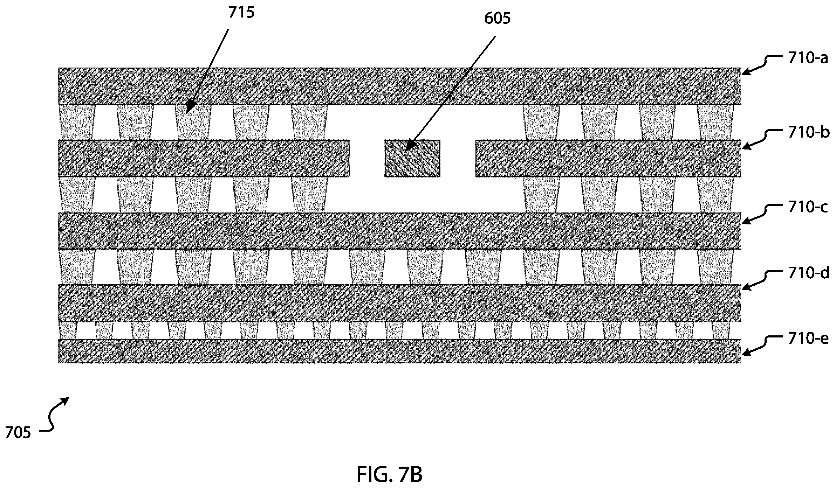

FIG. 7B is a cross-sectional view 705 illustrating example aspects of a chip seal, guard ring, and die-to-die signal route 605 in accordance with one or more embodiments of the present disclosure. FIG. 7B is a cross-sectional view 705 taken along the cross section line 630 of FIG. 6. FIG. 7B illustrates an example of the signal route 605 passing through the chip seal 620 (chip seal rail).

In the example of FIG. 7B, the signal route 605 may be implemented at metal layer 710-b, but embodiments of the present disclosure are not limited thereto. For example, the signal route 605 may be implemented at another metal layer (e.g., metal layer 710-c) of the metal layers 710. In some aspects, the signal route 605 is electrically isolated from other metal layers 710, and more particularly, from the guard ring 615 and chip seal 620.

Cross-sectional view 705 illustrates example aspects of tunneling for extending through the guard ring 615 and chip seal 620. For example, the signal route 605 may be implemented using a tunneling layer which extends through the crackstop structure 515 of FIG. 5. In one or more embodiments, the tunneling layer is electrically isolated from the crackstop structure 515. In one or more embodiments, the tunneling layer may extend under, above, or through the crackstop structure 515.

In some embodiments, the tunneling layer can be any metal layer within the metal layer stack of the design. In some aspects, the techniques described herein may include selecting the tunneling layer 635 based on the wafer foundry and foundry design rules. For example, in some cases, based on the wafer foundry and foundry design rules, the techniques described herein may include selecting one of the upper and thicker layer metals to be the layer where the crackstop is not continuous. In some embodiments, as illustrated at FIG. 6, signal routing 605 passes from one processing core (e.g., a processing core 105 of a die structure 110) to the next processing core (e.g., another processing core 105 of another die structure 110) across the scribe lines 603 (kerf) and is electrically isolated from the crackstop.

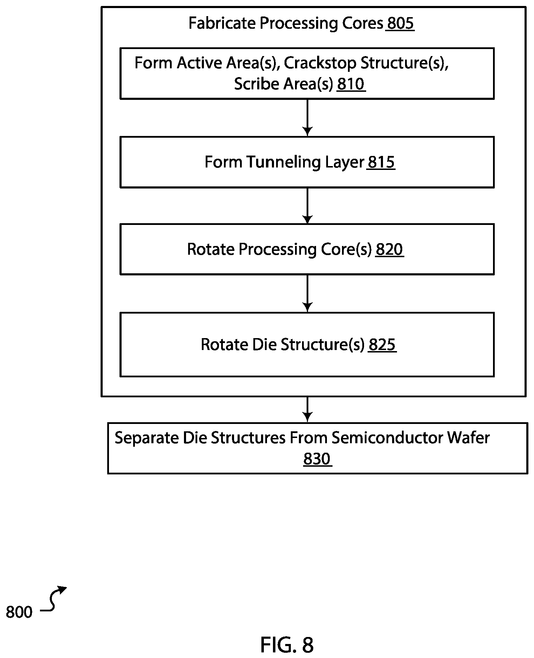

FIG. 8 illustrates an example flowchart of a method 800 of manufacturing a plurality of die structures in accordance with one or more embodiments of the present disclosure. The method 800 may be implemented in association with manufacturing a semiconductor wafer 100 described herein in accordance with one or more embodiments of the present disclosure.

At 805, the method 800 includes fabricating a plurality of processing cores on a semiconductor wafer based on a reticle set defining scribe lines associated with separating the plurality of processing cores from the semiconductor wafer.

In some aspects, at 810, the method 800 may include forming, in association with each processing core of the plurality of processing cores: an active area including one or more circuits; a crackstop structure surrounding the active area; and a scribe area associated with separating one or more die structures of the plurality of die structures from the semiconductor wafer.

In some aspects, at 815, the method 800 may include forming a tunneling layer extending under, above, or through the crackstop structure, where the tunneling layer is electrically isolated from the crackstop structure.

In some aspects, fabricating the plurality of processing cores may include fabricating at least one processing core of the plurality of processing cores with a different orientation relative to at least one other processing core, said different orientation being based on a target configuration of a die structure, and fabricating the plurality of processing cores is based at least in part on the target configuration. In an example, at 820, the method 800 may include rotating at least one processing core of the plurality of processing cores in association with a target configuration of a die structure, where fabricating the plurality of processing cores is based on the target configuration.

In some aspects, at least one die structure of the plurality of die structures may be fabricated to have a different orientation relative to at least one other die structure of the plurality of die structures, said different orientation being based on a target configuration of the plurality of die structures on the semiconductor wafer, wherein fabricating the plurality of processing cores is based at least in part on the target configuration. For example, the method 800 may include fabricating at least one die structure of the plurality of die structures to have a different orientation relative to at least one other die structure of the plurality of die structures, based on a target configuration. In an example, at 825, the method 800 may include rotating at least one die structure of the plurality of die structures in association with a target configuration, where fabricating the plurality of processing cores is based on the target configuration.

At 830, the method 800 includes separating the plurality of die structures from the semiconductor wafer based on the reticle set and a target quantity of processing cores for at least one die structure of the plurality of die structures. In some aspects, separating the plurality of die structures from the semiconductor wafer includes cutting the semiconductor wafer based on the scribe lines. In some aspects, the plurality of processing cores are spaced apart by a target distance associated with separating one or more processing cores of the plurality of processing cores or one or more die structures of the plurality of die structures from the semiconductor wafer.

In the descriptions of the flowcharts herein, the operations may be performed in a different order than the order shown, or the operations may be performed in different orders or at different times. Certain operations may also be left out of the flowcharts, one or more operations may be repeated, or other operations may be added to the flowcharts.

Embodiment 1. A semiconductor wafer comprising: a plurality of processing cores; and a plurality of die structures each comprising at least one processing core of the plurality of processing cores, wherein each processing core comprises: a set of first input output (I/O) interfaces configured for communication between the processing core and at least one second processing core of the plurality of processing cores, wherein the processing core and the at least one second processing core are comprised in a first die structure of the plurality of die structures; and a second input output (I/O) interface configured for communication between the processing core and at least one third processing core of the plurality of processing cores, wherein the at least one third processing core is comprised in a second die structure of the plurality of die structures, wherein the plurality of processing cores are spaced apart by a target distance associated with separating one or more processing cores of the plurality of processing cores or one or more die structures of the plurality of die structures from the semiconductor wafer.

Embodiment 2. The semiconductor wafer as in any prior embodiment, wherein each processing core comprises: processing circuitry configured to aggregate and process first data received from the at least one second processing core, wherein the processing circuitry generates second data in response to processing the first data; and routing circuitry configured to route the first data, the second data, or both to at least one fourth processing core comprised in the first die structure or to the at least one third processing core comprised in the second die structure.

Embodiment 3. The semiconductor wafer as in any prior embodiment, wherein the routing circuitry is configured to route the first data, the second data, or both based on an address table associated with the plurality of processing cores, the plurality of die structures, or both.

Embodiment 4. The semiconductor wafer as in any prior embodiment, wherein the routing circuitry is configured to reroute the first data, the second data, or both based on a detected fault associated with the at least one fourth processing core or to the at least one third processing core.

Embodiment 5. The semiconductor wafer as in any prior embodiment, wherein the first die structure comprises: processing circuitry configured to at least one of aggregate and process first data received from at least the second die structure of the plurality of die structures, wherein the processing circuitry generates second data in response to processing the first data; and routing circuitry configured to route the first data, the second data, or both to at least one third die structure of the plurality of die structures.

Embodiment 6. The semiconductor wafer as in any prior embodiment, wherein the routing circuitry is configured to route the first data, the second data, or both based on an address table associated with the plurality of die structures.

Embodiment 7. The semiconductor wafer as in any prior embodiment, wherein the routing circuitry is configured to reroute the first data, the second data, or both based on a detected fault associated with the at least one third die structure.

Embodiment 8. The semiconductor wafer as in any prior embodiment, wherein the second I/O interface is configured for extra short reach (XSR) communications, very short reach (VSR) communications, or ultra short reach (USR) communications, among the plurality of processing cores.

Embodiment 9. The semiconductor wafer as in any prior embodiment, wherein the first I/O interface, the second I/O interface, or both comprises a serial interface or a parallel interface.

Embodiment 10. The semiconductor wafer as in any prior embodiment, wherein each processing core comprises: an active area comprising one or more circuits; and a crackstop structure surrounding the active area; and a scribe area associated with separating one or more die structures of the plurality of die structures from the semiconductor wafer.

Embodiment 11. The semiconductor wafer as in any prior embodiment, further comprising: a tunneling layer extending under, above, or through the crackstop structure, wherein the tunneling layer is electrically isolated from the crackstop structure.

Embodiment 12. The semiconductor wafer as in any prior embodiment, wherein each processing core further comprises: first electrostatic discharge (ESD) protection circuitry associated with the first set of I/O interfaces; and second ESD processing circuitry associated with the second I/O interface.

Embodiment 13. The semiconductor wafer as in any prior embodiment, wherein respective structures of the plurality of processing cores are identical.

Embodiment 14. The semiconductor wafer as in any prior embodiment, wherein a structure of at least one processing core of the plurality of processing cores is different from a structure of at least one other processing core of the plurality of processing cores.

Embodiment 15. The semiconductor wafer as in any prior embodiment, wherein the second die structure is adjacent the first die structure.

Embodiment 16. A method of manufacturing a plurality of die structures, the method comprising: fabricating a plurality of processing cores on a semiconductor wafer based on a reticle set defining scribe lines associated with separating the plurality of processing cores from the semiconductor wafer; and separating the plurality of die structures from the semiconductor wafer based on the reticle set and a target quantity of processing cores for at least one die structure of the plurality of die structures, wherein separating the plurality of die structures from the semiconductor wafer comprises cutting the semiconductor wafer based on the scribe lines, wherein the plurality of processing cores are spaced apart by a target distance associated with separating one or more processing cores of the plurality of processing cores or one or more die structures of the plurality of die structures from the semiconductor wafer.

Embodiment 17. The method as in any prior embodiment, further comprising forming, in association with each processing core of the plurality of processing cores: an active area comprising one or more circuits; a crackstop structure surrounding the active area; and a scribe area associated with separating one or more die structures of the plurality of die structures from the semiconductor wafer.

Embodiment 18. The method as in any prior embodiment, further comprising: forming a tunneling layer extending under, above, or through the crackstop structure, wherein the tunneling layer is electrically isolated from the crackstop structure.

Embodiment 19. The method as in any prior embodiment, wherein fabricating the plurality of processing cores includes fabricating at least one processing core of the plurality of processing cores with a different orientation relative to at least one other processing core, said different orientation being based on a target configuration of a die structure, and fabricating the plurality of processing cores is based at least in part on the target configuration.

Embodiment 20. The method as in any prior embodiment, wherein at least one die structure of the plurality of die structures is fabricated to have a different orientation relative to at least one other die structure of the plurality of die structures, said different orientation being based on a target configuration of the plurality of die structures on the semiconductor wafer, wherein fabricating the plurality of processing cores is based at least in part on the target configuration.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form detailed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the various embodiments with various modifications as are suited to the particular use contemplated.

While the preferred embodiments have been described, it will be understood that those skilled in the art, both now and in the future, may make various improvements and enhancements which fall within the scope of the claims which follow. These claims should be construed to maintain the proper protection for the disclosure as first described.

Aspects of the present disclosure are set out in the following numbered clauses:
Clause 1. A semiconductor wafer comprising:
   a plurality of processing cores; and
   a plurality of die structures each comprising at least one processing core of the plurality of processing cores,
   wherein each processing core comprises:
      a set of first input output (I/O) interfaces configured for communication between the processing core and at least one second processing core of the plurality of processing cores, wherein the processing core and the at least one second processing core are comprised in a first die structure of the plurality of die structures; and
      a second input output (I/O) interface configured for communication between the processing core and at least one third processing core of the plurality of processing cores, wherein the at least one third processing core is comprised in a second die structure of the plurality of die structures,
      wherein the plurality of processing cores are spaced apart by a target distance associated with separating one or more processing cores of the plurality of processing cores or one or more die structures of the plurality of die structures from the semiconductor wafer.
Clause 2. The semiconductor wafer of clause 1, wherein each processing core comprises:
   processing circuitry configured to aggregate and process first data received from the at least one second processing core, wherein the processing circuitry generates second data in response to processing the first data; and
   routing circuitry configured to route the first data, the second data, or both to at least one fourth processing core comprised in the first die structure or to the at least one third processing core comprised in the second die structure.
Clause 3. The semiconductor wafer of clause 2, wherein the routing circuitry is configured to route the first data, the second data, or both based on an address table associated with the plurality of processing cores, the plurality of die structures, or both.
Clause 4. The semiconductor wafer of clause 2, wherein the routing circuitry is configured to reroute the first data, the second data, or both based on a detected fault associated with the at least one fourth processing core or to the at least one third processing core.
Clause 5. The semiconductor wafer of clause 1, wherein the first die structure comprises:
   processing circuitry configured to at least one of aggregate and process first data received from at least the second die structure of the plurality of die structures, wherein the processing circuitry generates second data in response to processing the first data; and
   routing circuitry configured to route the first data, the second data, or both to at least one third die structure of the plurality of die structures.
Clause 6. The semiconductor wafer of clause 5, wherein the routing circuitry is configured to route the first data, the second data, or both based on an address table associated with the plurality of die structures.
Clause 7. The semiconductor wafer of clause 5, wherein the routing circuitry is configured to reroute the first data, the second data, or both based on a detected fault associated with the at least one third die structure.
Clause 8. The semiconductor wafer of clause 1, wherein the second I/O interface is configured for extra short reach (XSR) communications, very short reach (VSR) communications, or ultra short reach (USR) communications, among the plurality of processing cores.
Clause 9. The semiconductor wafer of clause 1, wherein the first I/O interface, the second I/O interface, or both comprises a serial interface or a parallel interface.
Clause 10. The semiconductor wafer of clause 1, wherein each processing core comprises:
   an active area comprising one or more circuits; and
   a crackstop structure surrounding the active area; and
   a scribe area associated with separating one or more die structures of the plurality of die structures from the semiconductor wafer.
Clause 11. The semiconductor wafer of clause 10, further comprising:
   a tunneling layer extending under, above, or through the crackstop structure, wherein the tunneling layer is electrically isolated from the crackstop structure.
Clause 12. The semiconductor wafer of clause 1, wherein each processing core further comprises:
   first electrostatic discharge (ESD) protection circuitry associated with the first set of I/O interfaces; and
   second ESD processing circuitry associated with the second I/O interface.
Clause 13. The semiconductor wafer of clause 1, wherein respective structures of the plurality of processing cores are identical.
Clause 14. The semiconductor wafer of clause 1, wherein a structure of at least one processing core of the plurality of processing cores is different from a structure of at least one other processing core of the plurality of processing cores.
Clause 15. The semiconductor wafer of clause 1, wherein the second die structure is adjacent the first die structure.
Clause 16. A method of manufacturing a plurality of die structures, the method comprising:
   fabricating a plurality of processing cores on a semiconductor wafer based on a reticle set defining scribe lines associated with separating the plurality of processing cores from the semiconductor wafer; and
   separating the plurality of die structures from the semiconductor wafer based on the reticle set and a target quantity of processing cores for at least one die structure of the plurality of die structures, wherein separating the plurality of die structures from the semiconductor wafer comprises cutting the semiconductor wafer based on the scribe lines,
   wherein the plurality of processing cores are spaced apart by a target distance associated with separating one or more processing cores of the plurality of processing cores or one or more die structures of the plurality of die structures from the semiconductor wafer.
Clause 17. The method of clause 16, further comprising forming, in association with each processing core of the plurality of processing cores:
   an active area comprising one or more circuits;
   a crackstop structure surrounding the active area; and
   a scribe area associated with separating one or more die structures of the plurality of die structures from the semiconductor wafer.
Clause 18. The method of clause 17, further comprising:
   forming a tunneling layer extending under, above, or through the crackstop structure, wherein the tunneling layer is electrically isolated from the crackstop structure.
Clause 19. The method of clause 16, wherein:
   fabricating the plurality of processing cores comprises fabricating at least one processing core of the plurality of processing cores with a different orientation relative to at least one other processing core, said different orientation being based on a target configuration of a die structure, and
   fabricating the plurality of processing cores is based at least in part on the target configuration.
Clause 20. The method of clause 16, wherein:
   at least one die structure of the plurality of die structures is fabricated to have a different orientation relative to at least one other die structure of the plurality of die structures, said different orientation being based on a target configuration of the plurality of die structures on the semiconductor wafer,
   wherein fabricating the plurality of processing cores is based at least in part on the target configuration.

## Claims

**1.** A semiconductor wafer comprising:
a plurality of processing cores; and
a plurality of die structures each comprising at least one processing core of the plurality of processing cores,
wherein each processing core comprises:
a set of first input output (I/O) interfaces configured for communication between the processing core and at least one second processing core of the plurality of processing cores, wherein the processing core and the at least one second processing core are comprised in a first die structure of the plurality of die structures; and
a second input output (I/O) interface configured for communication between the processing core and at least one third processing core of the plurality of processing cores, wherein the at least one third processing core is comprised in a second die structure of the plurality of die structures,
wherein the plurality of processing cores are spaced apart by a target distance associated with separating one or more processing cores of the plurality of processing cores or one or more die structures of the plurality of die structures from the semiconductor wafer.

**2.** The semiconductor wafer of claim 1, wherein each processing core comprises:
processing circuitry configured to aggregate and process first data received from the at least one second processing core, wherein the processing circuitry generates second data in response to processing the first data; and
routing circuitry configured to route the first data, the second data, or both to at least one fourth processing core comprised in the first die structure or to the at least one third processing core comprised in the second die structure.

**3.** The semiconductor wafer of claim 2, wherein the routing circuitry is configured to route the first data, the second data, or both based on an address table associated with the plurality of processing cores, the plurality of die structures, or both; or
wherein the routing circuitry is configured to reroute the first data, the second data, or both based on a detected fault associated with the at least one fourth processing core or to the at least one third processing core.

**4.** The semiconductor wafer of claim 1, wherein the first die structure comprises:
processing circuitry configured to at least one of aggregate and process first data received from at least the second die structure of the plurality of die structures, wherein the processing circuitry generates second data in response to processing the first data; and
routing circuitry configured to route the first data, the second data, or both to at least one third die structure of the plurality of die structures.

**5.** The semiconductor wafer of claim 4, wherein the routing circuitry is configured to route the first data, the second data, or both based on an address table associated with the plurality of die structures; or
wherein the routing circuitry is configured to reroute the first data, the second data, or both based on a detected fault associated with the at least one third die structure.

**6.** The semiconductor wafer of any preceding claim, wherein the second I/O interface is configured for extra short reach (XSR) communications, very short reach (VSR) communications, or ultra short reach (USR) communications, among the plurality of processing cores.

**7.** The semiconductor wafer of any preceding claim, wherein the first I/O interface, the second I/O interface, or both comprises a serial interface or a parallel interface.

**4.** The semiconductor wafer of any preceding claim, wherein each processing core comprises:
an active area comprising one or more circuits; and
a crackstop structure surrounding the active area; and
a scribe area associated with separating one or more die structures of the plurality of die structures from the semiconductor wafer; and
preferably, further comprising:
a tunneling layer extending under, above, or through the crackstop structure, wherein the tunneling layer is electrically isolated from the crackstop structure.

**9.** The semiconductor wafer of any preceding claim, wherein each processing core further comprises:
first electrostatic discharge (ESD) protection circuitry associated with the first set of I/O interfaces; and
second ESD processing circuitry associated with the second I/O interface.

**10.** The semiconductor wafer of any preceding claim, wherein respective structures of the plurality of processing cores are identical.

**11.** The semiconductor wafer of any one of claims 1 to 9, wherein a structure of at least one processing core of the plurality of processing cores is different from a structure of at least one other processing core of the plurality of processing cores.

**12.** The semiconductor wafer of any preceding claim, wherein the second die structure is adjacent the first die structure.

**13.** A method of manufacturing a plurality of die structures, the method comprising:
fabricating a plurality of processing cores on a semiconductor wafer based on a reticle set defining scribe lines associated with separating the plurality of processing cores from the semiconductor wafer; and
separating the plurality of die structures from the semiconductor wafer based on the reticle set and a target quantity of processing cores for at least one die structure of the plurality of die structures, wherein separating the plurality of die structures from the semiconductor wafer comprises cutting the semiconductor wafer based on the scribe lines,
wherein the plurality of processing cores are spaced apart by a target distance associated with separating one or more processing cores of the plurality of processing cores or one or more die structures of the plurality of die structures from the semiconductor wafer.

**14.** The method of claim 13, further comprising forming, in association with each processing core of the plurality of processing cores:
an active area comprising one or more circuits;
a crackstop structure surrounding the active area; and
a scribe area associated with separating one or more die structures of the plurality of die structures from the semiconductor wafer; and
preferably, further comprising:
forming a tunneling layer extending under, above, or through the crackstop structure, wherein the tunneling layer is electrically isolated from the crackstop structure.

**15.** The method of claim 13, wherein:
fabricating the plurality of processing cores comprises fabricating at least one processing core of the plurality of processing cores with a different orientation relative to at least one other processing core, said different orientation being based on a target configuration of a die structure, and
fabricating the plurality of processing cores is based at least in part on the target configuration;
or wherein:
at least one die structure of the plurality of die structures is fabricated to have a different orientation relative to at least one other die structure of the plurality of die structures, said different orientation being based on a target configuration of the plurality of die structures on the semiconductor wafer,
wherein fabricating the plurality of processing cores is based at least in part on the target configuration.
